**Europäisches Patentamt**

**European Patent Office**

**Office européen des brevets**

(19)

(11) **EP 0 910 928 B1**

(12) **EUROPÄISCHE PATENTSCHRIFT**

(45) Veröffentlichungstag und Bekanntmachung des Hinweises auf die Patenterteilung:
**12.01.2000 Patentblatt 2000/02**

(51) Int Cl.⁷: **H04S 1/00**, H04S 3/00, H04B 1/66

(21) Anmeldenummer: **97927117.8**

(22) Anmeldetag: **03.06.1997**

(86) Internationale Anmeldenummer:
**PCT/EP97/02875**

(87) Internationale Veröffentlichungsnummer:
**WO 98/03037 (22.01.1998 Gazette 1998/03)**

(54) **CODIEREN UND DECODIEREN VON AUDIOSIGNALEN UNTER VERWENDUNG VON INTENSITY-STEREO UND PRÄDIKTION**

CODING AND DECODING OF AUDIO SIGNALS BY USING INTENSITY STEREO AND PREDICTION PROCESSES

CODAGE ET DECODAGE DE SIGNAUX AUDIO AU MOYEN D'UN PROCEDE STEREO EN INTENSITE ET DE PREDICTION

(84) Benannte Vertragsstaaten:
**AT BE CH DE DK ES FI FR GB GR IE IT LI LU MC NL PT SE**

(30) Priorität: **12.07.1996 DE 19628293**

(43) Veröffentlichungstag der Anmeldung:
**28.04.1999 Patentblatt 1999/17**

(73) Patentinhaber:
• **FRAUNHOFER-GESELLSCHAFT ZUR FÖRDERUNG DER ANGEWANDTEN FORSCHUNG E.V.**
**80636 München (DE)**
• **AT & T Laboratories/Research**
**Florham Park, NJ 07932 (US)**
• **Lucent Technologies**
**Murray Hill, NJ 07974-0636 (US)**

(72) Erfinder:
• **GBUR, Uwe**
**D-10827 Berlin (DE)**

• **DIETZ, Martin**
**D-90408 Nürnberg (DE)**
• **BRANDENBURG, Karlheinz**
**D-91054 Erlangen (DE)**
• **GERHÄUSER, Heinz**
**D-91344 Waischenfeld (DE)**
• **HERRE, Jürgen**
**D-91054 Buckenhof (DE)**
• **QUACKENBUSH, Schuyler**
**Westfield, NJ 07090 (US)**

(74) Vertreter: **Schoppe, Fritz, Dipl.-Ing. et al**
**Schoppe, Zimmermann & Stöckeler Patentanwälte**
**Postfach 71 08 67**
**81458 München (DE)**

(56) Entgegenhaltungen:
**EP-A- 0 497 413      EP-A- 0 530 916**
**EP-A- 0 599 824      US-A- 4 815 132**
**US-A- 5 491 773**

EP 0 910 928 B1

**Beschreibung**

Die vorliegende Erfindung bezieht sich auf das Codieren und Decodieren von Audiosignalen und insbesondere auf das Codieren und Decodieren von Audiosignalen unter Verwendung eines Intensity-Stereo-Verfahrens und einer Prädiktion.

Moderne Audiocodierverfahren bzw. -Decodierverfahren, die beispielsweise nach dem Standard MPEG-Layer 3 arbeiten, sind in der Lage, die Datenrate von digitalen Audiosignalen beispielsweise um einen Faktor zwölf zu komprimieren, ohne die Qualität derselben merkbar zu verschlechtern.

Neben einem hohen Codierungsgewinn in den einzelnen Kanälen, wie z.B. dem linken Kanal L und dem rechten Kanal R, wird im Stereofall auch die Redundanz und Irrelevanz der beiden Kanäle untereinander ausgenutzt. Bekannte und bereits verwendete Verfahren sind das sogenannte MS-Stereo-Verfahren (MS = Mitte-Seite) und das Intensity-Stereo-Verfahren (IS-Verfahren).

Das für Fachleute bekannte MS-Stereo-Verfahren nutzt im wesentlichen die Redundanz der beiden Kanäle untereinander aus, wobei dabei eine Summe der beiden Kanäle und eine Differenz der beiden Kanäle berechnet wird, welche dann jeweils als modifizierte Kanaldaten für den linken bzw. rechten Kanal übertragen werden. Die in dem Codierer entfernte Redundanz zwischen den beiden Kanälen wird im Decodierer wieder hinzugefügt. Das heißt, daß das MS-Stereoverfahren exakt rekonstruierend ist.

Im Gegensatz dazu nutzt das Intensity-Stereo-Verfahren vornehmlich die Stereoirrelevanz aus. Bezüglich der Stereoirrelevanz ist zu sagen, daß die räumliche Wahrnehmung des menschlichen Gehörsystems von der Frequenz der wahrgenommenen Audiosignale abhängt. Bei niedrigeren Frequenzen werden sowohl Betrags- als auch Phaseninformationen beider Stereosignale durch das menschliche Gehörsystem bewertet, wobei die Wahrnehmung von Hochfrequenzkomponenten hauptsächlich auf der Analyse der Energie-Zeit-Hüllkurven beider Kanäle begründet ist. Somit sind die exakten Phaseninformationen der Signale in beiden Kanälen für die räumliche Wahrnehmung nicht relevant. Diese Eigenschaft des menschlichen Gehörs wird verwendet, um die Stereoirrelevanz zur weiteren Datenreduktion von Audiosignalen durch das Intensity-Stereo-Verfahren zu verwenden.

Da das Stereo-Intensity-Verfahren bei hohen Frequenzen keine genaue Ortsinformation aufzulösen vermag, ist es daher möglich, ab einer im Codierer bestimmten Intensity-Grenzfrequenz statt zweier Stereokanäle L, R eine gemeinsame Energieeinhüllende für beide Kanäle zu übertragen. Zusätzlich zu dieser gemeinsamen Energieeinhüllenden werden grob quantisierte Richtungsinformationen zusätzlich als Seiteninformationen übertragen.

Da also bei der Verwendung der Intensity-Stereo-Codierung ein Kanal nur teilweise übertragen wird, kann die Biteinsparung bis zu 50% betragen. Es ist jedoch zu beachten, daß das IS-Verfahren im Decodierer nicht exakt rekonstruierend ist.

Bei dem IS-Verfahren, das bisher in dem Standard MPEG-Layer 3 verwendet wird, wird über ein sogenanntes Modus_Erweiterungs_Bit (mode_extension_bit) angezeigt, daß das IS-Verfahren in einem Block von Stereoaudiospektralwerten überhaupt aktiv ist, wobei jeder Block ein ihm zugeordnetes Modus Erweiterungs Bit aufweist.

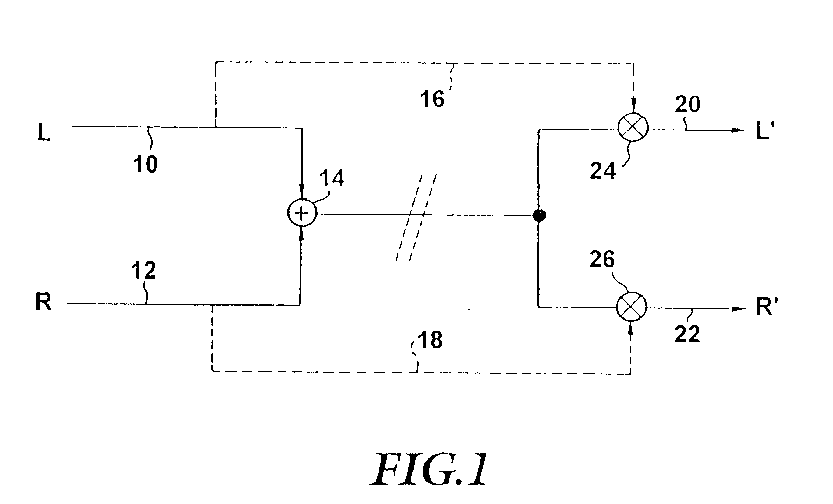

In Fig. 1 befindet sich eine Prinzipdarstellung des bekannten IS-Verfahrens. Stereoaudiospektralwerte für einen Kanal L 10 und für einen Kanal R 12 werden an einem Summationspunkt 14 summiert, um eine Energieeinhüllende I = $L_i$ + $R_i$ der beiden Kanäle zu erhalten. $L_i$ und $R_i$ stellen hier die Stereoaudiospektralwerte des Kanals L bzw. der Kanals R in einem beliebigen Skalenfaktorband dar. Wie bereits erwähnt wurde, ist die Verwendung des IS-Verfahrens nur oberhalb einer bestimmten IS-Grenzfrequenz erlaubt, um keine Codierstörungen in die codierten Stereoaudiospektralwerte einzuführen. Deshalb müssen in einem Bereich von 0 Hz bis zu der IS-Grenzfrequenz der linke und der rechte Kanal separat codiert werden. Die Bestimmung der IS-Grenzfrequenz als solche wird in einem separaten Algorithmus durchgeführt, der keinen Teil dieser Erfindung darstellt. Ab dieser Grenzfrequenz codiert der Codierer das Summensignal des linken Kanals 10 und des rechten Kanals 12, das an dem Summationspunkt 14 gebildet wird.

Zusätzlich zu der Energieeinhüllenden, d.h. dem Summensignal aus linkem und rechtem Kanal, die beispielsweise in dem codierten linken Kanal übertragen werden kann, sind ferner Skalierungsinformationen 16 für den Kanal L sowie Skalierungsinformationen 18 für den Kanal R für eine Decodierung notwendig. Bei dem Intensity-Stereo-Verfahren, wie es beispielsweise im MPEG Layer 2 implementiert ist, werden Skalenfaktoren für den linken und den rechten Kanal übertragen. An dieser Stelle sei jedoch angemerkt, daß bei dem IS-Verfahren im MPEG Layer 3 für IS-codierte Stereoaudiospektralwerte Intensity-Richtungsinformationen lediglich im rechten Kanal übertragen werden, mit denen dann, wie es weiter hinten dargelegt ist, die Stereoaudiospektralwerte wieder decodiert werden.

Die Skalierungsinformationen 16 und 18 werden als Seiteninformationen jeweils zusätzlich zu den codierten Spektralwerten des Kanals L sowie des Kanals R übertragen. Ein Decodierer liefert an einem decodierten Kanal L' 20 bzw. an einem decodierten Kanal R' 22 decodierte Audiosignalwerte, wobei die Skalierungsinformationen 16 für den Kanal R sowie die Skalierungsinformationen 18 für den Kanal L mit den decodierten Stereoaudiospektralwerten der jeweiligen Kanäle an einem L-Multiplizierer 24 bzw. an einem R-Multiplizierer 26 multipliziert werden, um die ursprünglich codierten Stereo-audiospektralwerte wieder zu decodieren.

Vor dem Anwenden einer IS-Codierung oberhalb einer bestimmten IS-Grenzfrequenz oder einer MS-Codierung unterhalb dieser Grenzfrequenz werden die Stereoaudiospektralwerte für jeden Kanal zu sogenannten Skalenfaktorbändern gruppiert. Diese Bänder sind an die Wahrnehmungseigenschaften des Gehörs angepaßt. Jedes dieser Bänder kann mit einem zusätzlichen Faktor, dem sogenannten Skalenfaktor, verstärkt werden, der als Seiteninformationen für den jeweiligen Kanal übertragen wird und der einen Teil der Skalierungsinformationen 16 sowie der Skalierungsinformationen 18 aus Fig. 1 darstellt. Diese Faktoren bewirken eine Formung eines durch eine Quantisierung eingeführten Störgeräusches, derart, daß dasselbe unter Berücksichtigung psychoakustischer Gesichtspunkte "maskiert" und damit unhörbar wird.

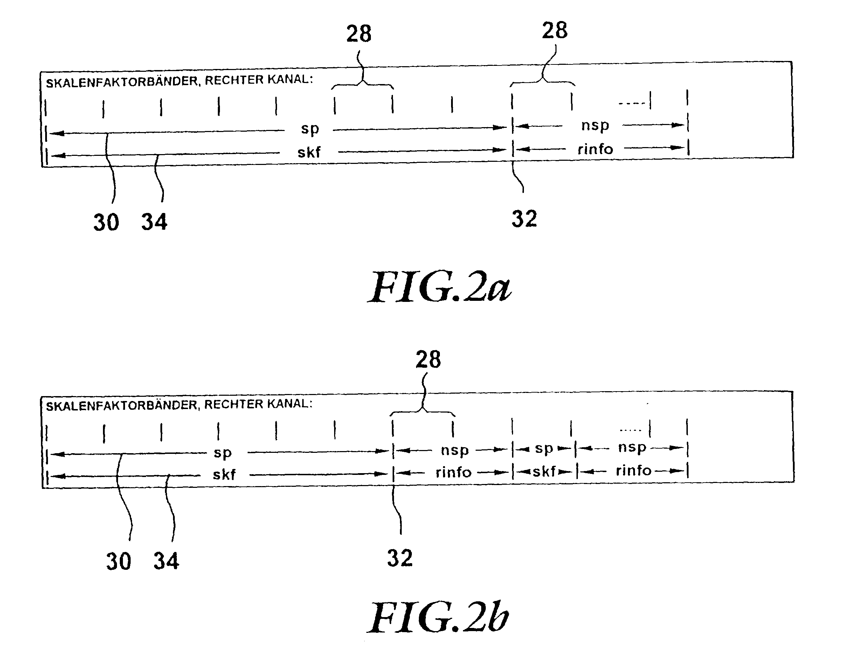

Fig. 2a zeigt ein Format des codierten rechten Kanals R, der beispielsweise bei einem Audiocodierverfahren MPEG-Layer 3 verwendet wird. Auch alle weiteren Ausführungen bezüglich der Intensity-Stereo-Codierung beziehen sich auf das Verfahren nach dem Standard MPEG Layer 3. In der ersten Zeile in Fig. 2a sind die einzelnen Skalenfaktorbänder 28, in die die Stereoaudiospektralwerte gruppiert sind, schematisch gezeigt. Die in Fig. 2a gezeichnete gleiche Bandbreite der Skalenfaktorbänder dient lediglich der Übersichtlichkeit der Darstellung und wird in der Praxis aufgrund der psychoakustischen Eigenschaften des Gehörsystems nicht auftreten.

In der zweiten Zeile von Fig. 2a befinden sich codierte Stereoaudiospektralwerte sp, die unterhalb einer IS-Grenzfrequenz 32 ungleich Null sind, wobei die Stereoaudiospektralwerte in dem rechten Kanal über der IS-Grenzfrequenz, wie bereits erwähnt, zu Null (Zero_Part) gesetzt werden nsp (nsp = Nullspektrum).

In der dritten Zeile von Fig. 2a befinden sich ein Teil der Seiteninformationen 34 für den rechten Kanal. Dieser gezeigte Teil der Seiteninformationen 34 besteht zum einen aus den Skalenfaktoren skf für den Bereich unterhalb der IS-Grenzfrequenz sowie aus Richtungsinformationen rinfo 36 für den Bereich über der IS-Grenzfrequenz 32. Diese Richtungsinformationen werden verwendet, um bei dem Intensity-Stereo-Verfahren noch eine grobe Ortsauflösung des IS-codierten Frequenzbereichs zu gewährleisten. Diese Richtungsinformationen rinfo 36, die auch Intensity-Positionen (is_pos) genannt werden, werden also anstelle der Skalenfaktoren im rechten Kanal übertragen. Es sei noch einmal angemerkt, daß unterhalb der IS-Grenzfrequenz im rechten Kanal nach wie vor die den Skalenfaktorbändern 28 entsprechenden Skalenfaktoren 34 vorhanden sind. Die Intensity-Positionen 36 zeigen die wahrgenommene Stereoabbildungsposition (das Verhältnis von links zu rechts) der Signalquelle innerhalb der jeweiligen Skalenfaktorbänder 28 an. In jedem Skalenfaktorband 28 über der IS-Grenzfrequenz werden die decodierten Werte der übertragenen Stereoaudiospektralwerte nach dem Verfahren MPEG Layer 3 durch die folgenden Skalierungsfaktoren $k_L$ für den linken Kanal und $k_R$ für den rechten Kanal skaliert:

$$k_L = is\_ratio / (1+is\_ratio) \qquad (1)$$

und

$$k_R = 1 / (1+is\_ratio) \qquad (2)$$

Die Gleichung für is_ratio lautet folgendermaßen:

$$is\_ratio = \tan(is\_pos \cdot \pi/12) \qquad (3)$$

Der Wert is_pos ist ein mit 3 Bit quantisierter Wert, wobei nur die Werte von 0 bis 6 gültige Positionswerte darstellen. Aus den folgenden beiden Gleichungen können aus dem I-Signal ($I = L_i + R_i$) der linke und der rechte Kanal wieder zurückgerechnet werden:

$$R_i = I \cdot is\_ratio/(1+is\_ratio) = I \cdot k_L \qquad (4)$$

$$L_i = I \cdot 1/(1+is\_ratio) = I \cdot k_R \qquad (5)$$

$R_i$ und $L_i$ stellen die Intensity-Stereo-decodierten Stereoaudiospektralwerte dar. An dieser Stelle sei angemerkt, daß das Format des linken Kanals zu dem in Fig. 2a gezeigten Format des rechten Kanals analog ist, wobei jedoch im linken Kanal oberhalb der IS-Grenzfrequenz 32 statt dem Nullspektrum das kombinierte Spektrum $I = L_i + R_i$ zu finden ist, und wobei ferner keine Richtungsinformationen is_pos für den linken Kanal sondern gewöhnliche Skalenfaktoren vorhanden sind. Der Übergang von den quantisierten Summenspektralwerten ungleich Null zu den Nullwerten im rechten Kanal kann dem Decodierer beim Standard MPEG Layer 3 implizit die IS-Grenzfrequenz anzeigen.

Im Codierer wird der übertragene Kanal L also als die Summe des linken und des rechten Kanals berechnet, wobei die übertragenen Richtungsinformationen durch folgende Gleichung bestimmt werden können:

$$is\_pos = nint[\arctan(\sqrt{E_L}/\sqrt{E_R}) \cdot 12/\pi] \qquad (6)$$

Dabei stellt die Funktion nint[x] die Funktion "nächste Ganzzahl" dar, wobei $E_L$ und $E_R$ die Energien in den jeweiligen Skalenfaktorbändern des linken bzw. rechten Kanals sind. Diese Formulierung des Codierers/Decodierers führt zu einer annähernden Rekon-

struction von Signalen in dem linken und in dem rechten Kanal.

Das Intensity-Stereo-Verfahren ist in R. G. v. d. Waal, R. N. J. Veldhuis: "Subband Coding of Stereophonic Digital Audio Signals", IEEE ICASSP, S. 3601 - 3604, sowie in J. Herre, K. Brandenburg, D. Lederer: "Intensity Stereo Coding", 96th AES Convention, Amsterdam 1994, Preprint 3799 beschrieben.

Beim Codieren und Decodieren mittels eines NBC-Codierers ist bereits die Verwendung einer Prädiktion bekannt. Insbesondere wird eine rückwärts adaptive Prädiktion zweiter Ordnung verwendet. "Rückwärtsadaptiv" bedeutet, daß keine Prädiktorkoeffizienten übertragen werden brauchen, da der Prädiktor im Codierer und im Decodierer mit den gleichen Eingangssignalen gespeist wird. Aufgrund dieser Tatsache ist die Prädiktionseinrichtung in der Decodiervorrichtung in der Lage, die Prädiktionskoeffizienten selbst zurückzurechnen.

Die Arbeitsweise eines Prädiktors beruht darauf, daß derselbe aus vorangehenden Eingangswerten einen Schätzwert für das aktuelle Signal liefert. Für tonale Signale, d.h. Signale mit einem eher schmalen Spektrum, ist das Prädiktorfehlersignal, d.h. die Differenz des Ursprungsspektrums und des Schätzwerts, wesentlich kleiner als das Ursprungsspektrum, weshalb das Prädiktionsfehlersignal mit weniger Bits codiert werden kann, was zu einer weiteren entscheidenden Datenkomprimierung führt. Es wird also nur dieses quantisierte Prädiktionsfehlersignal übertragen. Der Prädiktor des Decodierers kann nun daraus das ursprüngliche Signal wieder rückgewinnen.

Sind die Eingangssignale des Prädiktors nicht tonal, wie es beispielsweise bei Audiosignalen der Fall ist, die einem Applaus eines Publikums entsprechen, so kann das Prädiktionsfehlersignal größer werden als das Ursprungssignal. Die Prädiktion ergibt dann einen Bitverlust, d.h. sie führt zu einer Vergrößerung der zu codierenden Datenmenge. Aus diesem Grund kann die Prädiktion skalenfaktorbandweise an- und ausgeschaltet werden. Ebenso wie die Intensity-Richtungsinformationen werden auch die Informationen, ob in einem Skalenfaktorband eine Prädiktion verwendet wird oder nicht, als Seiteninformationen übertragen.

Sollen nun die Intensity-Stereo-Codierung sowie die Prädiktion gleichzeitig bei der Codierung von Stereoaudiospektralwerten verwendet werden, so ergibt sich folgendes Problem. Der Intensity-Stereo-Algorithmus findet vor der Prädiktion statt. Diese Reihenfolge ist zwingend, da es keinen Sinn machen würde, aus Prädiktionsfehlersignalen eine gemeinsame Energieeinhüllende für beide Kanäle sowie Intensity-Richtungsinformationen zu erzeugen. Wie bereits erwähnt wurde, wird bei der IS-Codierung der Abschnitt des rechten Kanals, der die Stereoaudiospektralwerte 30 enthält, zu Null gesetzt, wie es in Fig. 2a oder 2b gezeigt ist. Diese NullWerte stellen nun die Eingangswerte eines Prädiktors für den rechten Kanal dar. Da ein Prädiktor einen Schätzwert aus mindestens einem vorhergehenden Eingangswert berechnet, wird es bei einem Übergang der Verarbeitung eines Skalenfaktorbandes 28 unter der Intensity-Stereo-Grenzfrequenz 32 zu einem Skalenfaktorband über dieser Grenzfrequenz auftreten, daß die Stereoaudiospektralwerte 30 des rechten Kanals oberhalb der in IS-Grenzfrequenz, die nicht immer gleich ist, sondern ständig abhängig vom Audiosignal bestimmt werden muß, abrupt null werden. Der Prädiktor wird jedoch noch für eine gewisse Zeit Schätzwerte ungleich Null ausgeben, wodurch das zu codierende Fehlersignal ebenfalls ungleich Null wird. Dies würde dazu führen, daß oberhalb der IS-Grenzfrequenz im rechten Kanal 12 Audiospektralwerte ungleich Null übertragen werden müßten, was zu einer Verletzung der Voraussetzungen für das Intensity-Stereo-Verfahren an sich führt.

Möglicherweise aufgrund der genannten Schwierigkeit bei einer Codierung bzw. Decodierung von Audiosignalen unter gleichzeitiger Verwendung der Prädiktion sowie der Intensity-Stereo-Codierung werden beide Verfahren zusammen bisher nicht angewendet, obgleich die gleichzeitige Verwendung der Prädiktion und des IS-Verfahrens zu einer weiteren Komprimierung der zu codierenden Daten beitragen würde. Wenn das Intensity-Stereo-Verfahren überhaupt nicht verwendet wird, um eine problemfreie Prädiktion durchführen zu können, werden die zu Anfang beschriebenen Vorteile der Intensity-Stereo-Codierung zur Datenkomprimierung nicht ausgenützt. Zum anderen wäre es denkbar, lediglich die Stereoaudiospektralwerte unterhalb der Intensity-Stereo-Grenzfrequenz mittels eines Prädiktors zu komprimieren, und die Stereoaudiospektralwerte oberhalb der IS-Grenzfrequenz 32 lediglich unter Verwendung des Intensity-Stereo-Verfahrens zu codieren. Eine Prädiktion der Stereo-Audiospektralwerte 30 im linken Kanal oberhalb der Intensity-Stereo-Grenzfrequenz würde jedoch eine zusätzliche Komprimierung der zu codierenden Daten ermöglichen.

Die Aufgabe der vorliegenden Erfindung besteht darin, ein Verfahren zum Codieren von Stereoaudiospektralwerten, ein Verfahren zum Decodieren von codierten Stereoaudiospektralwerten, eine Vorrichtung zum Codieren von Stereoaudiospektralwerten oder eine Vorrichtung zum Decodieren von codierten Stereoaudiospektralwerten zu schaffen, bei denen eine erhöhte Datenkompression möglich ist.

Diese Aufgabe wird durch ein Verfahren zum Codieren von Stereoaudiospektralwerten gemäß Anspruch 1, durch ein Verfahren zum Decodieren von teilweise im Intensity-Stereo-Verfahren und teilweise mittels einer Prädiktion codierten Stereoaudiospektralwerten gemäß Anspruch 10, durch eine Vorrichtung zum Codieren von Stereoaudiospektralwerten gemäß Anspruch 13 oder durch eine Vorrichtung zum Decodieren von teilweise im Intensity-Stereo-Verfahren und teilweise mittels einer Prädiktion codierten Stereoaudiospektralwerten gemäß Anspruch 15 gelöst.

Der vorliegenden Erfindung liegt die Erkenntnis zugrunde, daß eine erhöhte Datenkompression durch gemeinsame Verwendung der Prädiktion und der Stereo-Intensity-Codierung von Stereoaudiospektralwerten ermöglicht wird, wofür nach der weiteren Erkenntnis der Erfindung die Prädiktion für den rechten Kanal deaktiviert werden muß, falls die Intensity-Stereo-Codierung für Stereoaudiospektralwerte in dem entsprechenden Skalenfaktorband aktiviert ist. Damit die Prädiktion jedoch sinnvoll weiter adaptieren kann, um bei Stereoaudiospektralwerten, die nicht durch die Intensity-Stereo-Codierung codiert sind, korrekte Prädiktionswerte zu liefern, muß der Prädiktor des rechten Kanals, der bei Intensity-Stereo-codierten Stereoaudiospektralwerten ein Nullspektrum aufweist, zum anderen mit den Intensity-stereo-decodierten Stereoaudiospektralwerten für den rechten Kanal gespeist werden. Wenn dies nicht durchgeführt wird, dejustiert sich der Prädiktor, wodurch der Datenkompressionsgewinn aus der Prädiktion nach Abschalten der IS-Codierung zeitweilig erheblich sinkt.

Für den rechten Kanal muß also bei der Codierung mittels des Stereo-Intensity-Verfahrens der Prädiktor für den rechten Kanal ebenfalls gewissermaßen weiterlaufen, wobei derselbe mit den uncodierten Stereoaudiospektralwerten des rechten Kanals gespeist wird. Damit jedoch die Intensity-Stereo-Voraussetzung, daß die Stereoaudiospektralwerte für ein Skalenfaktorband über der Intensity-Stereo-Grenzfrequenz zu Null gesetzt sind, erfüllt ist, dürfen die Ergebnisse der Prädiktion des rechten Kanals nicht zum Codieren der Stereo-audiospektralwerte berücksichtigt werden.

Die Prädiktion muß sich demnach immer weiteradaptieren können, d.h. die Prädiktionskoeffizienten aktualisieren können, wenn sich IS-codierte Skalenfaktorbänder mit einer bestimmten Mittenfrequenz und nicht IS-codierte Skalenfaktorbänder mit der im wesentlichen gleichen Mittenfrequenz abwechseln. Dies kann zum Beispiel der Fall sein, wenn sich die IS-Grenzfrequenz von einem Block zum nächsten ändert, oder wenn gemäß Fig. 2b ein Skalenfaktorband oberhalb der IS-Grenzfrequenz in einem Block IS-codiert und in einem darauffolgenden Block IS-decodiert ist.

Ferner wurde bereits erwähnt, daß die Prädiktion skalenfaktorbandweise bei stark nicht-tonalen Signalen deaktiviert werden kann. Wenn jedoch beispielsweise der Applaus eines Publikums vorbei ist, werden die Signale in diesem Skalenfaktorband wieder tonal sein, weshalb in dem dann zu codierenden Block die Prädiktion wieder aktiviert werden sollte. Auch in diesem Fall muß sich die Prädiktion weiter adaptieren können, damit sie nach einer Aktivierung sofort wieder kleine Prädiktionsfehlersignale für eine hohe Datenkompression liefert. "Aktivieren" oder "Deaktivieren" bzw. "An-" und "Ausschalten" der Prädiktion bedeutet demnach im Sinne dieser Anmeldung, daß der Prädiktor weiterhin mit Eingangswerten gespeist wird und eine Prädiktion durchführt, um seine Prädiktionskoeffizienten aktualisieren zu können, daß die Ergebnisse der Prädiktion jedoch in den codierten Signalen nicht berücksichtigt werden.

Bevorzugte Ausführungsbeispiele der vorliegenden Erfindung werden nachfolgend bezugnehmend auf die beiliegenden Zeichnungen detaillierter erläutert. Es zeigen:

Fig. 1        ein Prinzipschaltbild für eine Intensity-Stereo-Codierung gemäß dem Stand der Technik;

Fig. 2a       ein Format der Daten bei Vorliegen einer Stereo-Intensity-Codierung für den rechten Kanal für den Standard MPEG Layer 3;

Fig. 2b       ein Format der Daten bei Vorliegen einer Stereo-Intensity-Codierung für den rechten Kanal für das MPEG-NBC-Verfahren;

Fig. 3a       eine erste Version einer Prädiktionseinrichtung für den linken Kanal;

Fig. 3b       eine zweite Version einer Prädiktionseinrichtung für den linken Kanal;

Fig. 4        eine Prädiktionseinrichtung für den rechten Kanal;

Fig. 5        eine Prädiktionseinrichtung zum Decodieren von codierten Stereoaudiospektralwerten; und

Fig. 6        ein Blockschaltbild eines Decodierers zum Decodieren von codierten stereoaudiospektralwerten.

Fig. 2b zeigt ein Format der Daten für den rechten Kanal R bei Vorliegen einer Stereo-Intensity-Codierung unter Verwendung des MPEG2-NBC-Verfahrens. Der Unterschied zu Fig. 2a, bzw. zu dem Verfahren MPEG Layer 3, besteht darin, daß ein Anwender bei dem MPEG2-NBC-Verfahren die Flexibilität besitzt, auch oberhalb der IS-Grenzfrequenz 32 eine Intensity-Stereo-Codierung der Stereoaudiospektralwerte für jeweils einen Abschnitt, d.h. eine Gruppierung von mindestens einem Skalenfaktorband, selektiv ein- bzw. auszuschalten. Damit ist die IS-Grenzfrequenz im Vergleich zum MPEG Layer 3 eigentlich keine richtige Grenzfrequenz mehr, da beim NBC-Verfahren auch oberhalb der IS-Grenzfrequenz die IS-Codierung wieder aus- bzw. angeschaltet werden kann. Dies war beim Layer 3 nicht möglich, d.h. die Stereoaudiospektralwerte über der IS-Grenzfrequenz mußten bei Vorliegen einer IS-Codierung für einen Abschnitt auf jeden Fall auch ganz bis zum oberen Ende des Spektralbereichs IS-codiert werden. Das neue NBC-Verfahren muß nun nicht für den gesamten Spektralbereich oberhalb der IS-Grenze die IS-Codierung aktivieren, sondern dasselbe erlaubt auch das Ausschalten der IS-Codierung, so dies signalisiert ist. Es können sich also IS-codierte Skalenfaktorbänder mit nicht codierten Skalenfaktorbändern abwechseln.

Die in einem Abschnitt mit IS-Codierung für den rechten Kanal übertragenen Skalenfaktoren stellen nun ebenfalls analog zum Stand der Technik die Intensity-Richtungsinformationen 36 dar, wobei diese Werte selbst ebenfalls einer Differenz- und Huffman-Codierung unterzogen werden. Im rechten Kanal stehen, wie es bereits erwähnt wurde, in den Skalenfaktorbändern oberhalb der IS-Grenzfrequenz 32, in denen IS aktiviert wurde, keine Stereoaudiospektralwerte, sondern ein Nullspektrum. Der linke Kanal enthält in IS-codierten Abschnitten das Summensignal des linken und des rechten Kanals. Das Summensignal wird jedoch derart normiert, daß seine Energie innerhalb der jeweiligen Skalenfaktorbänder nach der IS-Decodierung der Energie des linken Kanals entspricht. Daher kann der linke Kanal im Falle einer verwendeten IS-Codierung in der Decodiervorrichtung auch unverändert übernommen werden und muß nicht durch Summen- oder Differenzbildung extra ermittelt werden. Die Stereoaudiospektralwerte des rechten Kanals können nun aus den Stereoaudiospektralwerten des linken Kanals unter Verwendung der Intensity-Richtungsinformationen is_pos 36, die in den Seiteninformationen des rechten Kanals vorhanden sind, zurückgerechnet werden.

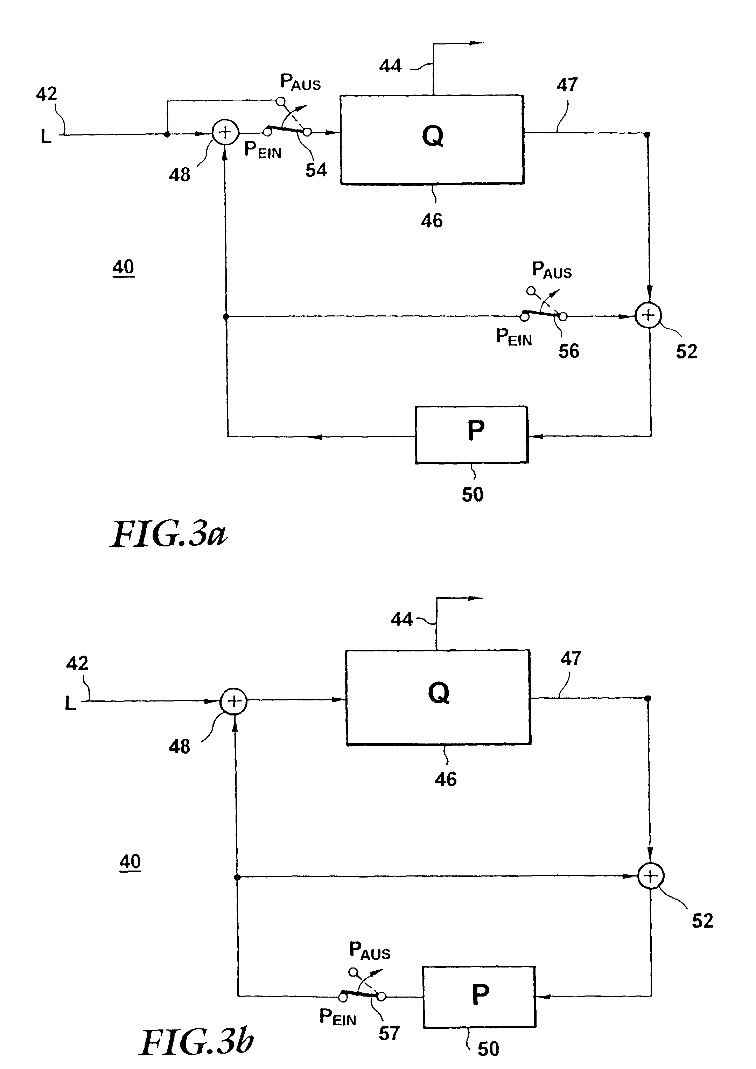

Fig. 3a zeigt schematisch eine erste Version einer Prädiktionseinrichtung 40, welche einen Eingang 42 aufweist, in den Stereoaudiospektralwerte des linken Stereokanals L eingespeist werden können. An einem Ausgang 44 der Prädiktionseinrichtung 40 werden die zu übertragenen Prädiktionsfehlersignale in einen Bitstrom geschrieben, der sowohl die codierten Stereoaudiospektralwerte als auch Seiteninformationen zu denselben skalenfaktorbandweise enthält. Zwischen einem Eingang einer Quantisierungseinrichtung 46 zum Quantisieren des Prädiktionsfehlersignals und dem Eingang 42 der Prädiktionseinrichtung 40 befindet sich eine erste Summationseinrichtung 48, die eine Differenz zwischen den am Eingang 42 der Prädiktionseinrichtung 40 eingegebenen Stereoaudiospektralwerten und den Ausgangswerten eines Prädiktors 50 bildet (Prädiktionsfehlersignal). Die Quantisierungseinrichtung 46 führt in Analogie zu ihrem Namen eine Quantisierung der Stereoaudiospektralwerte durch und schreibt die quantisierten Werte in den Bitstrom. Gleichzeitig führt dieselbe im Gegensatz zu ihrem Namen ebenfalls eine Requantisierung durch, wobei die requantisierten Stereoaudiospektralwerte über ihrem zweiten Ausgang 47 ausgegeben werden.

Der Prädiktor 50 erhält an seinem Eingang Eingangswerte, die durch eine zweite Summationseinrichtung 52 gebildet werden. Diese zweite Summationseinrichtung summiert die Prädiktionsfehlersignale, die an einem Ausgang 47 der Quantisierungseinrichtung 46 wieder in requantisierter Form vorliegen, mit den Ausgangswerten des Prädiktors 50. Die Summe aus dem Prädiktionsfehlersignal und dem Prädiktionsschätzwert stellt also einen Eingangswert für den Prädiktor 50 dar, welcher zum nächsten Zeitpunkt als Eingangswert für denselben verwendet wird, um einen zukünftigen Wert abzuschätzen.

Die Prädiktionseinrichtung 40 weist ferner einen ersten Schalter 54 sowie einen zweiten Schalter 56 auf. Wie im Stand der Technik bereits erwähnt, kann es für bestimmte Skalenfaktorbänder vorteilhaft sein, keine Prädiktion durchzuführen, da dieselben nicht-tonale Audiodaten enthalten. Wird in diesen nicht-tonalen Skalenfaktorbändern dennoch eine Prädiktion durchgeführt, so wird dieselbe zu einem Bitverlust, d.h. zu einer Vergrößerung der zu codierenden Datenmenge statt zu einer Komprimierung derselben. Mit den Schaltern 54 und 56 kann die Prädiktion für den linken Kanal L ausgeschaltet werden. In Figur 3a sind die Schalter 54 und 56 derart gezeichnet, daß eine Prädiktion für den linken Kanal durchgeführt wird. Es sei darauf hingewiesen, daß die Schalter nur gemeinsam umgeschaltet werden dürfen. Es ist also nicht sinnvoll, einen Schalter für sich umzuschalten und den anderen in seiner Position zu belassen. Werden nun der Schalter 54 und der Schalter 56 aus der in Figur 3a gezeichneten Position PEIN in ihre andere Position $P_{AUS}$ umgeschaltet, so wird die erste Summationseinrichtung überbrückt, wodurch die Stereoaudiospektralwerte unprädiziert in die Quantisierungseinrichtung 46 gelangen und von dort in den codierten Bitstrom geschrieben werden.

Befindet sich der Schalter 54 in der Position $P_{AUS}$, die bezeichnet, daß keine Prädiktion durchgeführt werden soll, so laufen die Stereoaudiospektralwerte direkt durch den Quantisierer und erscheinen an der zweiten Summationseinrichtung 52 im Gegensatz zum Fall der Prädiktion nicht als Prädiktionsfehlersignale sondern als aktuelle Werte, die in den Prädiktor P eingespeist werden, damit sich derselbe adaptieren kann. Wäre nun der Schalter 56 in der Position $P_{EIN}$, wenn der Schalter 54 in der Position $P_{AUS}$ ist, dann würde das an der Summationseinrichtung 52 vorhandene aktuelle Prädiktionssignal mit einem weiteren Prädiktionssignal über den Schalter 56 summiert, weshalb der Prädiktor P 50 als Eingangssignal das Doppelte des Prädiktionssignals erhalten würde, was zu einer falschen Adaption der Prädiktionskoeffizienten des Prädiktors P 50 führen würde.

Fig. 3b zeigt eine zweite Version der Prädiktionseinrichtung für den linken Kanal L, die der ersten Version ähnlich ist, die jedoch statt der Schalter 54 und 56 nur eine Schalter 57 aufweist. Ist der Schalter 57 in der Position $P_{EIN}$, so wird die oben beschriebenen Prädiktion durchgeführt, wobei die Ergebnisse derselben zum Codieren von Daten verwendet werden. Befindet sich der Schalter 57 jedoch in der Position $P_{AUS}$, so ist die Prädiktionseinrichtung in Fig. 3b deaktiviert, d.h. die Prädiktion wird zwar zum Adaptieren der Prädiktionskoeffizienten durchgeführt, die Ergebnisse der Prädiktion werden aber beim Codieren der Daten nicht berücksichtigt.

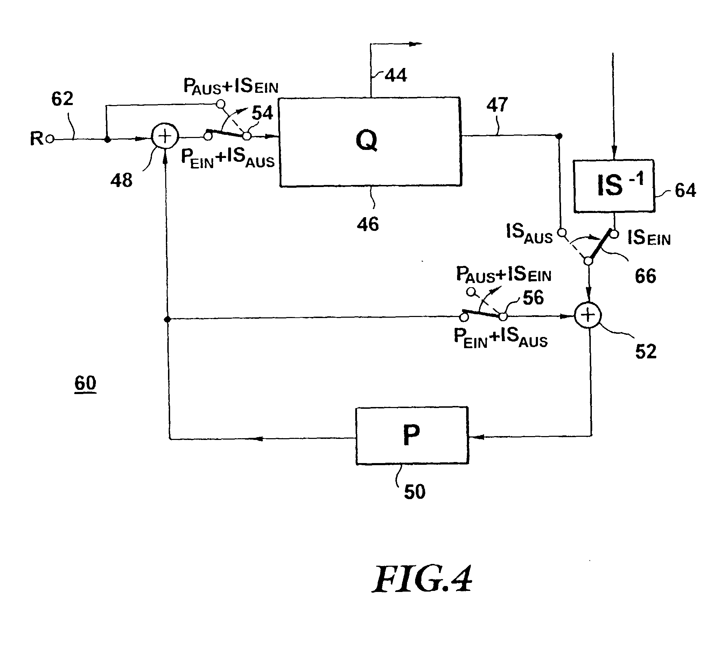

In Figur 4 befinden sich sowohl eine Prädiktionseinrichtung 60 für den rechten Kanal R, in die Stereoaudiospektralwerte 30 über einen Eingang 62 eingespeist werden, als auch eine Intensity-Stereo-Decodierungsvorrichtung (IS$^{-1}$) 64. Die anderen Komponenten der Figur 4 sind zu denen in Figur 3a gleich und wirken auf gleiche Art und Weise. Für Fachleute ist es offensichtlich, daß auch die zweite Version nach Fig. 3b als Prädiktionseinrichtung für den linken Kanal verwendet werden kann. Im Unterschied zur Prädiktionseinrichtung 40 für den linken Kanal weist die Prädiktionseinrichtung 60 für den rechten Kanal jedoch einen zusätzlichen dritten Schalter 66 auf, dessen Funktion und Nutzen nachfolgend beschrieben wird.

Wie bereits erwähnt wurde, führt eine einfache Prädiktion in dem rechten Kanal bei Stereoaudiospektralwerten, die Intensity-stereo-codiert sind, zu einem Fehlersignal, das ungleich Null ist. Wenn dieses Fehlersignal in den Bitstrom für den rechten Kanal geschrieben werden würde, wäre die Intensity-Stereo-Grundvoraussetzung verletzt, da die Stereo-audiospektralwerte im rechten Kanal in Skalenfaktorbändern oberhalb der Intensity-Stereo-Grenzfrequenz zu Null gesetzt werden. Damit der Prädiktor jedoch während einer Deaktivierung eine korrekte Adaption an den aktuellen Wert im rechten Kanal durchführen kann, müssen ihm dennoch Stereoaudiospektralwerte zugeführt werden. Da dieselben jedoch mittels des Intensity-Stereo-Verfahrens codiert sind, müssen sie in der IS-Decodierungsvorrichtung 64 decodiert werden und dem Prädiktor P 50 der Prädiktionseinrichtung 60 zugeführt werden. Die IS-Decodierungsvorrichtung 64 empfängt an ihrem Eingang also die Intensity-Stereo-codierten Stereoaudiospektralwerte des linken Kanals sowie die Intensity-Richtungsinformationen, die in den Seiteninformationen für den rechten Kanal übertragen werden.

Die Schalter 54, 56 und 66 sind in Figur 4 für eine Situation gezeichnet, in der eine Intensity-Stereo-Codierung der gerade zu verarbeitenden Stereoaudiospektralwerte vorhanden ist. Wie bereits angemerkt wurde, muß bei Vorliegen dieser Situation die Prädiktion ausgeschaltet sein, weswegen die Schalterpositionen der Schalter 54 und 56 P$_{AUS}$ und PEIN sind. Skalenfaktorbänder, die nicht codiert sind, können sowohl in dem linken als auch in dem rechten Kanal zu einer Verminderung der decodierten Datenmenge einer Prädiktion unterzogen werden. In diesem Falle werden die Schalter 54, 56 und 66 in die jeweilige Positionen P$_{EIN}$ + IS$_{AUS}$ bzw. IS$_{AUS}$ umgelegt. Bei einem bevorzugten Ausführungsbeispiel der vorliegenden Erfindung sieht die Prädiktionseinrichtung immer nur den wirklichen linken oder rechten Kanal. Eine potentielle MS-Codierung wird demnach ebenfalls in der Quantisierungseinrichtung Q 46 durchgeführt, also nach der Prädiktion.

Der dritte Schalter 66 ist nun wieder mit dem Ausgang 47 der Quantisierungseinrichtung 46 verbunden, wodurch über denselben wieder die Prädiktionsfehlersignale fließen, die in dem Bitstrom geschrieben werden, der an dem Ausgang 44 der Quantisierungseinrichtung erscheint. Die Intensity-Stereo-Decodierungsvorrichtung 64 ist in diesem Falle also nicht aktiv, da keine Intensity-Stereo-codierte Daten vorhanden sind.

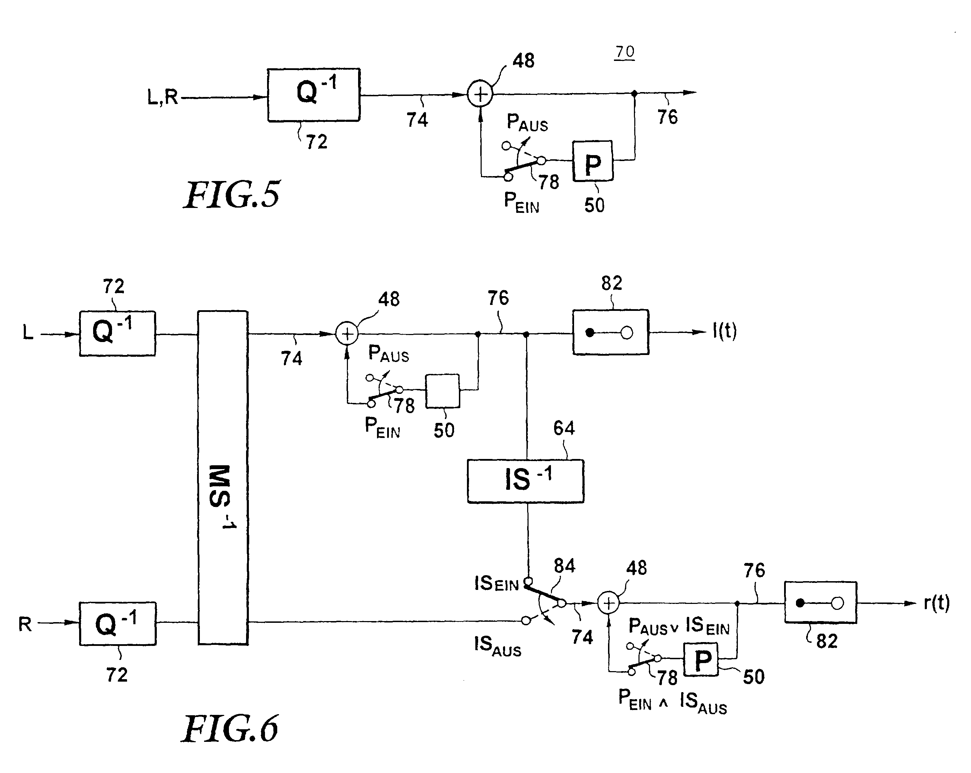

Figur 5 zeigt den prinzipiellen Aufbau einer Re-Prädiktionseinrichtung 70, die ähnlich zu der Prädiktionseinrichtung 40 für den linken Kanal und ähnlich zu der Prädiktionseinrichtung 60 für den rechten Kanal aufgebaut ist. Die zu decodierenden Stereoaudiospektralwerte laufen zuerst in eine Dequantisierungseinrichtung Q$^{-1}$ 72, welche die in der Quantisierungseinrichtung 46 eingeführte Quantisierung wieder rückgängig macht. Die dequantisierten Stereoaudiospektralwerte, die immer noch eine Prädiktion aufweisen, d.h. die Prädiktionsfehlersignale, gelangen nun an einen Eingang 74 der Re-Prädiktionseinrichtung 70.

Die erste Summationseinrichtung 48 sowie der eigentliche Prädiktor 50 sind zu den bereits vorher beschriebenen Einrichtungen mit gleichem Bezugszeichen identisch. An der Summationseinrichtung 48 wird nun eine Summe des requantisierten Prädiktionsfehlersignals sowie des Prädiktionsschätzwertes, der der Ausgangswert des Prädiktors P 50 ist, gebildet. Diese Summe wird als nächstes Eingangssignal in den Prädiktor P 50 verwendet und an einem Ausgang 76 der Re-Prädiktionseinrichtung 70 als re-prädiziertes Signal ausgegeben, falls ein vierter Schalter 78 in der in Figur 5 gezeichneten Position PEIN ist, die anzeigt, daß die gerade zu verarbeitenden Daten einer Prädiktion unterworfen worden sind. Der Schalter 78 stellt sicher, daß trotz einer Deaktivierung der Prädiktion der Prädiktor P 50 immer seine Prädiktionskoeffizienten adaptieren kann.

Wird nun aus den Seiteninformationen der Stereoaudiospektralwerte erfaßt, daß die gerade zu verarbeiteten Daten keiner Prädiktion unterworfen worden sind, wird der vierte Schalter 78 in seine Position P$_{AUS}$ umgeschaltet, wodurch der Ausgang des Prädiktors P nicht mehr mit der ersten Summationseinrichtung 48 verbunden ist. Der Quantisierer quantisiert dann im Gegensatz zur vorher beschriebenen Situation bei eingeschalteter Prädiktion keine Prädiktionsfehlersignale, sondern die tatsächlichen Stereoaudiospektralwerte. Am Ausgang der Re-Prädiktionseinrichtung 76 erscheinen also bei einer Trennung des Ausgangs des Prädiktors P 50 von der ersten Summationseinrichtung 48, d. h. bei einer Deaktivierung des Prädiktors P, uncodierte Stereoaudiospektralwerte, die auf für Fachleute bekannte Art und Weise in den Zeitbereich transformiert werden können, um zeitdiskrete Audiosignale zu erhalten.

An dieser Stelle sei darauf hingewiesen, daß die Prädiktoren P 50 der Decodierungsvorrichtung in Figur 5 und 6 zu den in Figur 3 und Figur 4 gezeigten Prädiktoren P 50 identisch sind. Aufgrund der Tatsache, daß die entsprechenden Prädiktoren 50 im Codierer und im Decodierer genau den gleichen Wert als Eingangswert erhalten, ist es nicht notwendig, verwendete Prädiktorkoeffizienten zu übertragen, da jeder Prädiktor dieselben selbst berechnen kann, was dem Prinzip der Rückwärtsadaption entspricht. "Rückwärtsadaption zweiter Ordnung" bedeutet, daß für einen erzeugten Schätzwert zwei vorausgehende Werte verwendet werden, die mittels der berechneten, d.h. adaptierten, Prädiktionskoeffizienten für Fachleute bekannte Art und Weise gewichtet werden, um einen neuen Schätzwert zu erzeugen.

Figur 6 zeigt ein bevorzugtes Ausführungsbeispiel einer Vorrichtung zum Decodieren von teilweise im Intensity-Stereo-Verfahren und teilweise mittels einer Prädiktion codierten Stereoaudiospektralwerten. Die derart codierten Stereoaudiospektralwerte in dem linken (L) und in dem rechten (R) Kanal werden in jeweilige Dequantisierungseinrichtungen 72 eingespeist. Die dequantisierten Werte der beiden Kanäle, die beispielsweise M-S-codiert sind, werden anschließend in einer M-S-Decodierungsvorrichtung 80 decodiert. Für Fachleute ist es offensichtlich, daß es zum Ausführen der vorliegenden Erfindung nicht unbedingt erforderlich ist, die Stereoaudiospektralwerte in Bereichen, die nicht Intensity-Stereo-codiert sind, mittels des Mitte-Seite-Verfahrens zu codieren. Dies ist jedoch für eine Datenmengenreduktion vorteilhaft.

Die derart decodierten Stereoaudiospektralwerte können bei einem bevorzugten Ausführungsbeispiel der vorliegenden Erfindung im linken Kanal L in einem bestimmten oder in mehreren Skalenfaktorbändern eine Prädiktions-Codierung aufweisen. In diesem Falle weist der vierte Schalter 78 in dem linken Kanal L die in Figur 6 gezeichnete Position $P_{AUS}$ auf. Hinter dem vierten Schalter 78 in dem linken Kanal L liegen die Stereoaudiospektralwerte in uncodierter Form vor. Sie können nun mittels einer geeigneten Frequenzbereichs-Zeitbereichs-Transformationseinrichtung 82 in zeitdiskrete Audiosignale umgesetzt werden.

Wie es bereits zu Anfang beschrieben wurde, verwendet ein bevorzugtes Ausführungsbeispiel der vorliegenden Erfindung eine Intensity-Stereo-Codierung, bei der die Stereoaudiospektralwerte im linken Kanal die Summe der Stereoaudiospektralwerte des linken und rechten Kanals enthalten. Dieselben sind bei einem bevorzugten Ausführungsbeispiel der Erfindung so normiert, daß deren Energie der des linken Kanals entspricht, was eine Rückgewinnung im Decoder überflüssig macht. Es kann jedoch auch ein anderes Intensity-Stereo-Verfahren eingesetzt werden, bei dem die Normierung des Summensignals in dem linken Kanal nicht in der Art durchgeführt wird, daß deren Energie der des ursprünglichen linken Kanals entspricht. Ist dies der Fall, so müssen die Stereoaudiospektralwerte, die dann hinter dem vierten Schalter 78 im linken Kanal L vorliegen, einer Intensity-Stereo-Decodierung unterzogen werden, die ebenfalls einen Zugriff auf die Seiteninformationen des rechten Kanals besitzt, in denen, wie bereits beschrieben, die Intensity-Richtungsinformationen vorhanden sind.

Die Stereoaudiospektralwerte in dem rechten Kanal R, die falls nötig M-S-decodiert worden sind, begegnen einem fünften Schalter 84, der in diesem Fall in der Position $IS_{AUS}$ ist, wodurch diese Stereoaudiospektralwerte über die Re-Prädiktionseinrichtung 70 re-prädiziert werden, und über den vierten Schalter 78, der in der Position $P_{EIN}$ ist, in die Frequenzbereichs-Zeitbereichs-Transformationseinrichtung 82 eingespeist werden, wodurch sich zeitdiskrete Stereoaudiosignale r(t) für den rechten Kanal ergeben.

Für Fachleute ist es offensichtlich, daß bei Vorliegen einer Intensity-Stereo-Codierung in einem Skalenfaktorband für dieses Skalenfaktorband keine MS-Decodierung durchgeführt wird, da diese beiden Codierungsverfahren nicht gleichzeitig verwendet werden können. Als Reaktion auf Seiteninformationen in den beiden Kanälen wird die MS-Decodierungsvorrichtung IS-codierte Stereoaudiospektralwerte unverändert passieren lassen.

IS-codierte Stereoaudiospektralwerte sind, wie bereits erwähnt wurde, in dem rechten Kanal R nicht vorhanden. Der rechte Kanal R besitzt lediglich als Seiteninformationen die Intensity-Richtungsinformationen is_pos. Um die IS-codierten Stereoaudiospektralwerte zu decodieren, werden die in dem linken Kanal L vorhandenen IS-codierten Stereoaudiospektralwerte einer IS-Decodierung in der IS-Decodierungsvorrichtung 64 unterzogen, welche ebenfalls einen Zugriff auf die Seiteninformationen in dem rechten Kanal besitzt. Die derart IS-decodierten Stereoaudiospektralwerte für den rechten Kanal gelangen über den fünften Schalter 84, der sich nun in der Position $IS_{EIN}$ befindet, in die Re-Prädiktionseinrichtung 70 des rechten Kanals R. Da jedoch Daten für den rechten Kanal bei Vorliegen einer IS-Codierung niemals einer Prädiktion unterworfen sind, da derselbe per Definition ein Nullspektrum aufweist, steht der vierte Schalter 78 im Kanal R in der Position $IS_{EIN}$, wodurch er den Prädiktor P 50 und die erste Summationseinrichtung in dem Kanal R überbrückt. Da die in der IS-Decodierungsvorrichtung 64 decodierten Stereoaudiospektralwerte für den rechten Kanal R keiner Prädiktion unterliegen können, werden dieselben über den Schalter 84 in den rechten Kanal R der Frequenzbereichs-Zeitbereichs-Transformationseinrichtung 82, die bei einem bevorzugten Ausführungsbeispiel eine inverse Filterbank sein kann, unverändert zugeführt, da der Ausgang des Prädiktors P durch den Schalter 78 deaktiviert ist, um zeitdiskrete decodierte Audiosignale r(t) zu ergeben.

Im Gegensatz zu dem in Fig. 1 gezeigten Intensity-Verfahren nach dem Standard MPEG Layer 2, bei dem die Intensity-Richtungsinformationen nicht mittels Intensity-Richtungsinformationen sondern mittels zweier getrennter Skalenfaktoren für den linken und den rechten Kanal übertragen werden, benötigt die NBC-Codierung bzw. -Decodierung aus nachfolgenden Gründen die Übertragung von Intensity-Richtungsinformationen is_pos, wie es bereits mehrmals erwähnt wurde.

Falls der linke Kanal nur Nullen überträgt, geht der vorliegende Ansatz davon aus, daß die Skalierungsinformationen irrelevant sind. Dies ist jedoch bei der Prädiktion nicht immer der Fall, da durch die Prädiktion das Prädiktorfehlersignal am Ausgang des Prädiktors nicht unbedingt Null sein muß. Dann müssen Skalenfaktoren eventuell aufmultipliziert werden. Andererseits kann es vorkommen, daß sich durch die Prädiktion quantisierte Spektralwerte innerhalb eines oder mehrerer Skalenfaktorbänder zu Null ergeben. In der Syntax des NBC-Verfahrens ist dann vorgesehen, für diesen Fall keinen Skalenfaktor zu übertragen. Für die IS-codierten Stereo-audiospektralwerte wäre dann auch keine Richtung vorhanden. Das würde zu einer völligen Zerstörung des Stereobildes für diese Stereoaudiospektralwerte führen.

Die Verwendung von Intensity-Richtungsinformationen statt zweier Skalenfaktoren erlaubt zur weiteren Reduzierung der codierten Datenmenge eine differentielle Codierung statt der absoluten Codierung der Intensity-Richtungsinformationen. Bei Skalenfaktoren in Bereichen, die nicht IS-codiert sind, ist der erste überhaupt auftretende oder Ausgangs-Wert eine auf 8 Bit quantisierte Größe. Bei Intensity-Stereo-codierten Stereoaudiospektralwerten ist der erste oder Ausgangs-Wert Null. Im codierten Bitstrom können nun abwechselnd IS-Skalenfaktoren und "normale" Skalenfaktoren abwechselnd erscheinen. Somit sind zur Codierung zwei Zustandsautomaten oder DPCM-Coder notwendig, die sich jeweils den letzten Wert der beiden Faktoren merken, um die nächsten Werte nach folgenden Gleichungen (7) und (8) zu berechnen.

$$dscf(n) = scf(n) - scf(n-1) \qquad (7)$$

$$dint\_pos = int\_pos(n) - int\_pos(n-1) \qquad (8)$$

scf(n) bezeichnet den Skalenfaktor des gerade betrachteten Skalenfaktorbandes, während scf(n-1) dem Skalenfaktor des vorherigen Bandes entspricht, wodurch dscf(n) die zu codierende Differenz der genannten Größe ist. Analog dazu ist dint pos die Differenz der nächsten Ganzzahlen der Intensity-Richtungsinformationen is_pos des betrachteten Skalenfaktorbandes n und der is_pos des letzten Skalenfaktorbandes n-1.

Für den Decodierer ist die Berechnung der IS-Richtungsinformationen analog, wobei die Gleichungen (7) und (8) für den Decodierer folgendermaßen lauten:

$$scf(n) = dscf(n) + scf(n-1) \qquad (9)$$

$$int\_pos = dint\_pos(n) + int\_pos(n-1) \qquad (10)$$

Der Decodierer berechnet also unter Verwendung zweier DPCM-Decoder den Skalenfaktorwert beziehungsweise die Intensity-Richtungsinformationen des gerade betrachteten Skalenfaktorbandes durch Addieren der Werte des vorherigen Skalenfaktorbandes mit der jeweiligen im Decodierer aktuellen Differenz.

**Patentansprüche**

1.  Verfahren zum Codieren von Stereoaudiospektralwerten, um codierte Stereoaudiospektralwerte zu erhalten, mit folgenden Schritten:

    Gruppieren der Stereoaudiospektralwerte in Skalenfaktorbänder (28), denen Skalenfaktoren (34) zugeordnet sind;

    Intensity-Stereo-Codieren der Stereoaudiospektralwerte in wenigstens einem der Skalenfaktorbänder (28), wodurch ein Kanal (L) Intensity-Stereo-codierte Stereoaudiospektralwerte und ein anderer Kanal (R) Stereoaudiospektralwerte mit einem Wert von im wesentlichen Null aufweist;

    falls die Stereoaudiospektralwerte in einem Skalenfaktorband (28) Intensity-Stereo-codiert sind,

    Intensity-Stereo-Decodieren (64) der Intensity-Stereo-codierten Stereoaudiospektralwerte des einen Kanals (L) in dem Skalenfaktorband (28), um Intensity-Stereo-decodierte Stereoaudiospektralwerte für den anderen Kanal (R) zu erhalten;

    Durchführen einer ersten Prädiktion (60) mit den Intensity-Stereo-decodierten Stereoaudiospektralwerten des anderen Kanals (R) in dem Skalenfaktorband (28), wobei die Ergebnisse der ersten Prädiktion (60) bei codierten Stereoaudiospektralwerten des anderen Kanals (R) nicht berücksichtigt werden;

    falls die Stereoaudiospektralwerte in einem Skalenfaktorband (28) nicht Intensity-Stereo-codiert sind,

    Durchführen der ersten Prädiktion (60) mit den Stereoaudiospektralwerten des anderen Kanals (R) in dem Skalenfaktorband (28), um die codierten Stereoaudiospektralwerte des anderen Kanals (R) zu erhalten.

**2.** Verfahren gemäß Anspruch 1, welches ferner folgenden Schritt aufweist:

Durchführen einer zweiten Prädiktion (40) der Stereo-audiospektralwerte unabhängig von einer vorliegenden Intensity-Stereo-Codierung zum Bilden der codierten Stereoaudiospektralwerte des einen Kanals (L).

**3.** Verfahren gemäß Anspruch 1 oder 2,

bei dem die erste (60) und die zweite (40) Prädiktion rückwärtsadaptive Prädiktionen zweiter Ordnung sind.

**4.** Verfahren gemäß einem beliebigen der vorhergehenden Ansprüche,

bei dem die Ergebnisse der ersten und der zweiten Prädiktion (60, 40) quantisiert (46) und in einen codierten Bitstrom geschrieben werden.

**5.** Verfahren gemäß einem beliebigen der vorhergehenden Ansprüche,

bei dem die Ergebnisse der ersten und der zweiten Prädiktion (60, 40) für nicht-tonale Stereoaudiospektralwerte für jedes Skalenfaktorband (28) selektiv berücksichtigt oder nicht berücksichtigt werden.

**6.** Verfahren gemäß einem beliebigen der vorhergehenden Ansprüche,

bei dem das Codieren der Stereoaudiospektralwerte mittels des Intensity-Stereo-Verfahrens in einem Skalenfaktorband (28) das Erzeugen von Intensity-Richtungsinformationen (36) für dieses Skalenfaktorband (28) aufweist.

**7.** Verfahren gemäß Anspruch 6,

bei dem die Intensity-Richtungsinformationen für ein Skalenfaktorband (28) ausgehend von einem Startwert differentiell codiert werden.

**8.** Verfahren gemäß einem beliebigen der vorhergehenden Ansprüche,

bei dem Stereoaudiospektralwerte in Skalenfaktorbändern (28), die nicht Intensity-Stereo-codiert sind, mittels des Mitte-Seite-Verfahrens codiert werden, wobei die diesen Skalenfaktcrbändern (28) zugeordneten Skalenfaktoren für jeden Kanal (L, R) ausgehend von einem Startwert differentiell codiert werden.

**9.** Verfahren gemäß einem beliebigen der vorhergehenden Ansprüche,

bei dem die erste oder die zweite Prädiktion (60, 40) aus vorausgehenden Eingangswerten aktuelle Schätzwerte erzeugen, von denen ein jeweils aktueller Ist-Wert subtrahiert wird, um ein Prädiktionsfehlersignal zu erzeugen, das statt des aktuellen Ist-Werts in einem Bitstrom codiert wird.

**10.** Verfahren zum Decodieren von zumindest teilweise mittels des Intensity-Stereo-Verfahrens und einer ersten (60) und einer zweiten (40) Prädiktion codierten Stereoaudiospektralwerten, die Seiteninformationen (34) aufweisen, mit folgenden Schritten:

Erfassen des Vorliegens einer Intensity-Stereo-Codierung oder der ersten (60) oder der zweiten (40) Prädiktion bei den Stereoaudiospektralwerten, die in Skalenfaktorbändern (28) gruppiert sind, für jedes einzelne Skalenfaktorband (28) aufgrund der Seiteninformationen (34);

Durchführen einer der zweiten Prädiktion (40) entsprechenden Prädiktion (70) mit mittels der zweiten Prädiktion codierten Stereoaudiospektralwerten in einem Kanal (L), um die zweite Prädiktion (40) rückgängig zu machen;

falls eine Intensity-Stereo-Codierung in einem Skalenfaktorband (28) vorliegt,

Durchführen einer Intensity-Stereo-Decodierung (64) der Intensity-Stereo-codierten Stereoaudiospektralwerte des einen Kanals (L) zum Bilden von Intensity-Stereo-decodierten Stereoaudiospektralwerten für den anderen Kanal (R) ;

Durchführen der der ersten Prädiktion (60) entsprechenden Prädiktion (70) mit den Intensity-Stereo-decodierten Stereoaudiospektralwerten des anderen Kanals (R), wobei die Ergebnisse der Prädiktion (70) bei decodierten Stereoaudiospektralwerten des anderen Kanals (R) nicht berücksichtigt werden;

falls keine Intensity-Stereo-Codierung in dem Skalenfaktorband (28) vorliegt:

Durchführen der der ersten Prädiktion (60) entsprechenden Prädiktion (70) in dem anderen Kanal (R) zum Bilden der decodierten Stereoaudiospektralwerte des anderen Kanals (R).

11. Verfahren gemäß Anspruch 10,

bei dem die der zweiten Prädiktion (40) entsprechende Prädiktion (70) zwar durchgeführt wird, die Ergebnisse derselben jedoch nicht berücksichtigt werden, wenn die Seiteninformationen (34) für ein Skalenfaktorband (28) anzeigen, daß keine Prädiktion der Stereoaudiospektralwerte in dem Skalenfaktorband (28) für den einen Kanal (L) vorliegt.

12. Verfahren gemäß Anspruch 10 oder 11,

bei dem die der ersten Prädiktion (60) entsprechende Prädiktion (70) zwar durchgeführt wird, die Ergebnisse derselben jedoch nicht berücksichtigt werden, wenn die Seiteninformationen für ein Skalenfaktorband (28) anzeigen, daß keine Prädiktion der Stereoaudiospektralwerte in dem Skalenfaktorband (28) für den anderen Kanal (R) vorhanden ist.

13. Vorrichtung zum Codieren von Stereoaudiospektralwerten, mit folgenden Merkmalen:

einer Einrichtung zum Gruppieren der Stereoaudiospektralwerte in Skalenfaktorbänder (28), denen Skalenfaktoren (34) zugeordnet sind;

einer Einrichtung zum Intensity-Stereo-Codieren der Stereoaudiospektralwerte in wenigstens einem der Skalenfaktorbänder, wodurch ein Kanal (L) Intensity-Stereo-codierte Stereoaudiospektralwerte und der andere Kanal (R) Stereoaudiospektralwerte mit einem Wert von im wesentlichen Null aufweist;

einer Intensity-Stereo-Decodierungsvorrichtung (64) zum Decodieren der Intensity-Stereo-codierten Stereoaudiospektralwerte in einem Skalenfaktorband (28); und

einer ersten Prädiktionseinrichtung (60) in dem anderen Kanal (R), welche eine erste, zweite und dritte Schalteinrichtung (54, 56, 66) aufweist, wobei die erste, die zweite und die dritte Schalteinrichtung (54, 56, 66) in einem ersten Zustand ($IS_{EIN}$) sind, wenn Intensity-Stereo-codierte Stereoaudiospektralwerte vorliegen, und wobei die erste, die zweite und die dritte Schalteinrichtung (54, 56, 66) in einem zweiten Zustand ($IS_{AUS}$) sind, wenn keine Intensity-Stereo-codierten Stereoaudiospektralwerte vorliegen;

wobei die erste Prädiktionseinrichtung (60) eine erste Prädiktion mit den von der Intensity-Stereo-Decodierungsvorrichtung (64) decodierten Intensity-Stereo-codierten Stereoaudiospektralwerten des anderen Kanals (R) durchführt, wenn die erste, die zweite und die dritte Schalteinrichtung (54, 56, 66) in dem ersten Zustand ($IS_{EIN}$) sind, wobei jedoch aufgrund der Stellung der ersten Schalteinrichtung (54) die Ergebnisse der Prädiktion bei den codierten Stereoaudiospektralwerten nicht berücksichtigt werden; und

wobei die Prädiktionseinrichtung (60) die erste Prädiktion der Stereoaudiospektralwerte in dem Skalenfaktorband (28) durchführt, um die codierten Stereoaudiospektralwerte des anderen Kanals (R) zu erhalten, wenn die erste, die zweite und die dritte Schalteinrichtung (54, 56, 66) in dem zweiten Zustand ($IS_{AUS}$) sind.

14. Vorrichtung gemäß Anspruch 13,

die ferner eine zweite Prädiktionseinrichtung (40) zum Durchführen einer zweiten Prädiktion der Stereoaudiospektralwerte in einem Skalenfaktorband unabhängig von einer vorliegenden Intensity-Stereo-Codierung zum Bilden der codierten Stereoaudiospektralwerte des einen Kanals (L) aufweist.

15. Vorrichtung zum Decodieren von zumindest teilweise mittels des Intensity-Stereo-Verfahrens und einer ersten (60) und einer zweiten (40) Prädiktion codierten Stereoaudiospektralwerten, die Seiteninformationen (34) aufweisen, mit folgenden Merkmalen:

einer ersten Re-Prädiktionseinrichtung (70) für einen Kanal (L) von Stereoaudiospektralwerten mit einem Eingang (74) und mit einem Ausgang (76);

einer zweiten Re-Prädiktionseinrichtung (70) für einen anderen Kanal (R) von Stereoaudiospektralwerten mit einem Eingang (74) und mit einem Ausgang (76);

einer Intensity-Stereo-Decodierungsvorrichtung (64) mit einem Eingang und mit einem Ausgang;

einer ersten Umschalteinrichtung (84) in dem anderen Kanal (R) zum Verbinden des Ausgangs der Intensity-Stereo-Decodierungsvorrichtung (64) mit dem Eingang (74) der zweiten Re-Prädiktionseinrichtung (70), wenn Intensity-Stereo-codierte Stereoaudiospektralwerte vorliegen, und zum Verbinden des Eingangs (74) der zweiten Re-Prädiktionseinrichtung (70) mit dem anderen Kanal (R) von Stereoaudiospektralwerten, wenn die Stereoaudiospektralwerte nicht Intensity-Stereo-codiert sind; und

einer zweiten Umschalteinrichtung (78) in dem anderen Kanal (R) zum Verbinden des Ausgangs (76) der zweiten Re-Prädiktionseinrichtung (70) in dem anderen Kanal (R) mit einem Ausgang für decodierte Stereoaudiospektralwerte des anderen Kanals (R), wenn die Stereoaudiospektralwerte nicht Intensity-Stereo-codiert sind, und zum Verbinden des Eingangs (74) der zweiten Prädiktionseinrichtung (70) in dem anderen Kanal (R) mit dem Ausgang für die decodierten Stereoaudiospektralwerte des anderen Kanals (R), wenn die Stereoaudiospektralwerte Intensity-Stereo-codiert sind.

**16.** Vorrichtung zum Decodieren gemäß Anspruch 15,

bei der die Re-Prädiktionseinrichtung (70) in dem einen Kanal (L) eine dritte Schalteinrichtung (78) und einen Prädiktor (P) aufweist, wobei die dritte Schalteinrichtung (78) einen Ausgang des Prädiktors (50) von dem ersten Kanal (L) trennt, wodurch die Ergebnisse der Prädiktion der Re-Prädiktionseinrichtung (70) nicht berücksichtigt werden.

**Claims**

**1.** A method of coding stereo audio spectral values, to obtain coded stereo audio spectral values, comprising the following steps:

grouping the stereo audio spectral values in scale factor bands (28), with which scale factors (34) are associated;

intensity stereo coding the stereo audio spectral values in at least one of the scale factor bands (28), whereby one channel (L) has intensity stereo coded stereo audio spectral values and another channel (R) has stereo audio spectral values with a value of substantially zero;

if the stereo audio spectral values in a scale factor band (28) are intensity stereo coded,

intensity stereo decoding (64) the intensity stereo coded stereo audio spectral values of one channel (L) in the scale factor band (28), to obtain intensity stereo decoded stereo audio spectral values for the other channel (R);

making a first prediction (60) with the intensity stereo decoded stereo audio spectral values of the other channel (R) in the scale factor band (28), the results of the first prediction (60) not being taken into account when the stereo audio spectral values of the other channel (R) are coded;

if the stereo audio spectral values in a scale factor band (28) are not intensity stereo coded,

making the first prediction (60) with the stereo audio spectral values of the other channel (R) in the scale factor band (28), to obtain the coded stereo audio spectral values of the other channel (R).

**2.** A method according to claim 1, further comprising the following step:

making a second prediction (40) of the stereo audio spectral values independently of existing intensity stereo coding, to form the coded stereo audio spectral values of one channel (L).

**3.** A method according to claim 1 or 2,

wherein the first (60) and second (40) prediction are second-order, backward adaptive predictions.

**4.** A method according to any of the preceding claims,

wherein the results of the first and second prediction (60, 40) are quantised (46) and written to a coded bit stream.

**5.** A method according to any of the preceding claims,

wherein the results of the first and second prediction (60, 40) for non-tonal stereo audio spectral values for each scale factor band (28) are taken into account selectively or are not taken into account.

**6.** A method according to any of the preceding claims,

wherein the coding of the stereo audio spectral values by the intensity stereo process in a scale factor band (28) includes the production of intensity direction information (36) for that band (28).

**7.** A method according to claim 6,

wherein the intensity direction information for a scale factor band (28) is coded differentially, beginning with a starting value.

8. A method according to any of the preceding claims,

wherein stereo audio spectral values in scale factor bands (28) which are not intensity stereo coded are coded by the middle-side process, the scale factors for each channel (L, R) which are associated with these bands (28) being coded differentially beginning with a starting value.

9. A method according to any of the preceding claims,

wherein the first or second prediction (60, 40) produces current estimates from preceding input values, from which estimates a respective current actual value is subtracted, to produce a prediction error signal which is coded in a bit stream instead of the current actual value.

10. A method of decoding stereo audio spectral values which are coded partly by the intensity stereo process and partly by means of a first (60) and a second (40) prediction and which have side information (34), comprising the following steps:

ascertaining the presence of intensity stereo coding or of the first (60) or second (40) prediction of the stereo audio spectral values, which are grouped in scale factor bands (28), for each individual band (28) on the basis of the side information (34);

making a prediction (70) corresponding to the second prediction (40), with stereo audio spectral values coded by means of the second prediction, in a channel L, in order to cancel the second prediction (40);

if there is intensity stereo coding in a scale factor band (28),

carrying out intensity stereo decoding (64) of the intensity stereo coded stereo audio spectral values of one channel (L), to form intensity stereo decoded stereo audio spectral values for the other channel (R);

making the prediction (70) corresponding to the first prediction (60), with the intensity stereo decoded stereo audio spectral values of the other channel (R), the results of the prediction (70) not being taken into account with decoded stereo audio spectral values of the other channel (R);

if there is no intensity stereo coding in a scale factor band (28),

making the prediction (70) corresponding to the first prediction (60), in the other channel (R) to form the decoded stereo audio spectral values of the other channel (R).

11. A method according to claim 10

wherein, although the prediction (70) corresponding to the second prediction (40) is made, the results thereof are not taken into account if the side information (34) for a scale band factor (28) indicates that there is no prediction of the stereo audio spectral values in the band (28) for one channel (L).

12. A method according to claim 10 or 11

wherein, although the prediction (70) corresponding to the first prediction (60) is made, the results thereof are not taken into account if the side information for a scale band factor (28) indicates that there is no prediction of the stereo audio spectral values in the band (28) for the other channel (R).

13. Apparatus for coding stereo audio spectral values, with the following features:

a means for grouping the stereo audio spectral values in scale factor bands (28), with which scale factors (34) are associated;

a means for intensity stereo coding the stereo audio spectral values in at least one of the scale factor bands, whereby one channel (L) has intensity stereo coded stereo audio spectral values and the other channel (R) has stereo audio spectral values with a value of substantially zero;

an intensity stereo decoder (64) for decoding the intensity stereo coded stereo audio spectral values in a scale factor band (28); and

a first predictor (60) in the other channel (R), which has a first, second and third switching means (54, 56, 66), the first, second and third switching means (54, 56, 66) being in a first state ($IS_{ON}$) when intensity stereo coded stereo audio spectral values are present, and the first, second and third switching means (54, 56, 66) being in a second state ($IS_{OFF}$) when no intensity stereo coded stereo audio spectral values are present;

wherein the first predictor (60) makes a first prediction with the stereo audio spectral values of the other channel (R), decoded by the intensity stereo decoder (64), when the first, second and third switching means (54, 56, 66) are in the first state ($IS_{ON}$), but wherein the results of the prediction are not taken into account with the coded stereo audio spectral values owing to the position of the first switching means (54); and

wherein the predictor (60) makes the first prediction of the stereo audio spectral values in the scale factor band (28), to obtain the coded stereo audio spectral values of the other channel (R), when the first, second and third switching means (54, 56, 66) are in the second state ($IS_{OFF}$).

**14.** Apparatus according to claim 13,

further comprising a second predictor (40) for making a second prediction of the stereo audio spectral values in a scale factor band independently of the presence of intensity stereo coding, to form the coded stereo audio spectral values of one channel (L).

**15.** Apparatus for decoding stereo audio spectral values which are coded at least partly by the intensity stereo process and a first (60) and a second (40) prediction and which have side information (34), with the following features:

a first re-predictor (70) for one channel (L) of stereo audio spectral values with an input (74) and an output (76);

a second re-predictor (70) for another channel (R) of stereo audio spectral values with an input (74) and an output (76);

an intensity stereo decoder (64) with an input and an output;

a first change-over means (84) in the other channel (R) for connecting the output of the intensity stereo decoder (64) to the input (74) of the second re-predictor (70) when intensity stereo coded stereo audio spectral values are present, and for connecting the input (74) of the second re-predictor (70) to the other channel (R) of stereo audio spectral values when those values are not stereo intensity coded; and

a second change-over means (78) in the other channel (R) for connecting the output (76) of the second re-predictor (70) in the other channel (R) to an output for decoded stereo audio spectral values of the other channel (R), when the stereo audio spectral values are not intensity stereo coded, and for connecting the input (74) of the second predictor (70) in the other channel (R) to the output for the decoded stereo audio spectral values of the other channel (R), when those values are intensity stereo coded.

**16.** Apparatus for decoding according to claim 15,

wherein the re-predictor (70) in one channel (L) has a third switching means (78) and a predictor (P), the third switching means (78) separating an output of the predictor (50) from the first channel (L), whereby the results of the prediction by the re-predictor (70) are not taken into account.

## Revendications

**1.** Procédé de codage de valeurs spectrales audio stéréo, pour obtenir des valeurs spectrales audio stéréo codées, aux étapes suivantes consistant à :

regrouper les valeurs spectrales audio stéréo en bandes de facteurs d'échelle (28) auxquelles sont associés des facteurs d'échelle (34) ; coder par le procédé stéréo en intensité les valeurs spectrales audio stéréo dans au moins l'une des bandes de facteurs d'échelle (28), d'où un canal (L) présente des valeurs spectrales audio stéréo codées par le procédé stéréo en intensité et un autre canal (R) présente des valeurs spectrales audio stéréo avec une valeur de sensiblement zéro ; si les valeurs spectrales audio stéréo dans une bande de facteurs d'échelle (28) sont codées par le procédé stéréo en intensité :

décoder par le procédé stéréo en intensité (64) les valeurs spectrales audio stéréo codées par le procédé stéréo en intensité de l'un (L) des canaux dans la bande de facteurs d'échelle (28), pour obtenir des valeurs spectrales audio stéréo décodées par le procédé stéréo en intensité pour l'autre canal (R) ; effectuer une première prédiction (60) avec les valeurs spectrales audio stéréo décodées par le procédé stéréo en intensité de l'autre canal (R) dans la bande de facteurs d'échelle (28), les résultats de la première prédiction (60) n'étant pas pris en compte dans les valeurs spectrales audio stéréo codées de l'autre canal (R) ;

si les valeurs spectrales audio stéréo dans une bande de facteurs d'échelle (28) ne sont pas codées par le procédé stéréo en intensité :

effectuer une première prédiction (60) avec les valeurs spectrales audio stéréo de l'autre canal (R) dans la bande de facteurs d'échelle (28), pour obtenir les valeurs spectrales audio stéréo codées de l'autre canal (R).

2. Procédé suivant la revendication 1, présentant, par ailleurs, l'étape suivante consistant à :

effectuer une seconde prédiction (40) des valeurs spectrales audio stéréo indépendamment d'un codage stéréo en intensité présent, pour former les valeurs spectrales audio stéréo codées de l'un (L) des canaux.

3. Procédé suivant la revendication 1 ou 2, dans lequel la première (60) et la seconde prédiction (40) sont des prédictions adaptatives en arrière de second ordre.

4. Procédé suivant l'une quelconque des revendications précédentes, dans lequel les résultats de la première et de la seconde prédiction (60, 40) sont quantifiés (46) et écrits dans un courant de bits codifié.

5. Procédé suivant l'une quelconque des revendications précédentes, dans lequel les résultats de la première et de la seconde prédiction (60, 40) sont, pour les valeurs spectrales audio stéréo non-tonales pour chaque bande de facteurs d'échelle (28), sélectivement pris en compte ou pas pris en compte.

6. Procédé suivant l'une quelconque des revendications précédentes, dans lequel le codage des valeurs spectrales audio stéréo à l'aide du procédé stéréo en intensité dans une bande de facteurs d'échelle (28) présente la génération d'informations de direction d'intensité (36) pour cette bande de facteurs d'échelle (28).

7. Procédé suivant la revendication 6, dans lequel les informations de direction d'intensité pour une bande de facteurs d'échelle (28) sont codées de manière différentielle, partant d'une valeur de départ.

8. Procédé suivant l'une quelconque des revendications précédentes, dans lequel des valeurs spectrales audio stéréo dans des bandes de facteurs d'échelle (28) qui ne sont pas codées par le procédé stéréo en intensité sont codées à l'aide du procédé centre-côté, les facteurs d'échelle associés à ces bandes de facteurs d'échelle (28) pour chaque canal (L, R) étant codifiés de manière différentielle, partant d'une valeur de départ.

9. Procédé suivant l'une quelconque des revendications précédentes, dans lequel la première ou la seconde prédiction (60, 40) génèrent, à partir de valeurs d'entrée précédentes, des valeurs estimées actuelles desquelles est déduite une valeur réelle actuelle correspondnate, pour générer un signal d'erreur de prédiction qui est codé au lieu de la valeur rélle actuelle dans un courant de bits.

10. Procédé de décodage de valeurs spectrales audio stéréo codées au moins en partie à l'aide du procédé stéréo en intensité et d'une première (60) et d'une seconde prédiction (40), présentant des informations latérales (34), aux étapes suivantes consistant à :

détecter la présence d'un codage stéréo en intensité ou d'une première (60) et d'une seconde prédiction (40) dans les valeurs spectrales audio stéréo, qui sont regroupées en bandes de facteurs d'échelle (28), pour chaque bande de facteurs d'échelle (28) individuelle sur base des informations latérales (34) ;
effectuer une prédiction (70), correspondant à la seconde prédiction (40), avec des valeurs spectrales audio stéréo codées à l'aide de la seconde prédiction dans un canal (L), pour annuler la seconde prédiction (40) ;
si un codage stéréo en intensité est présent dans une bande de facteurs d'échelle (28) :

effectuer un décodage stéréo en intensité (64) des valeurs spectrales audio stéréo codées par le procédé stéréo en intensité de l'un (L) des canaux, pour former des valeurs spectrales audio stéréo décodées par le procédé stéréo en intensité pour l'autre canal (R) ;
effectuer la prédiction (70), correspondant à la première prédiction (60), avec les valeurs spectrales audio stéréo décodées par le procédé stéréo en intensité de l'autre canal (R), les résultats de la prédiction (70) n'étant pas pris en compte dans les valeurs spectrales audio stéréo décodées de l'autre canal (R) ;

s'il n'est pas présent de codage stéréo en intensité dans la bande de facteurs d'échelle (28) :
effectuer la prédiction (70) correspondant à la première prédiction (60) dans l'autre canal (R), pour former les valeurs spectrales audio stéréo décodées de l'autre canal (R).

**11.** Procédé suivant la revendication 10, dans lequel la prédiction (70) correspondant à la seconde prédiction (40) est certes effectuée, mais les résultats de celle-ci ne sont pas pris en compte lorsque les informations latérales (34) pour une bande de facteurs d'échelle (28) indiquent qu'il n'est pas présent de prédiction des valeurs spectrales audio stéréo dans la bande de facteurs d'échelle (28) pour l'un canal (L).

**12.** Procédé suivant la revendication 10 ou 11, dans lequel la prédiction (70) correspondant à la première prédiction (60) est certes effectuée, mais les résultats de celle-ci ne sont pas pris en compte lorsque les informations latérales pour une bande de facteurs d'échelle (28) indiquent qu'il n'est pas présent de prédiction des valeurs spectrales audio stéréo dans la bande de facteurs d'échelle (28) pour l'autre canal (R).

**13.** Dispositif de codage de valeurs spectrales audio stéréo, aux caractéristiques suivantes :

un dispositif destiné à regrouper les valeurs spectrales audio stéréo en bandes de facteurs d'échelle (28) auxquelles sont associés des facteurs d'échelle (34) ;
un dispositif destiné à coder par le procédé stéréo en intensité les valeurs spectrales audio stéréo dans au moins l'une des bandes de facteurs d'échelle, d'où un canal (L) présente des valeurs spectrales audio stéréo codées par le procédé stéréo en intensité et l'autre canal (R) présente des valeurs spectrales audio stéréo avec une valeur de sensiblement zéro ;
un dispositif de décodage par le procédé stéréo en intensité (64) destiné à décoder les valeurs spectrales audio stéréo codées par le procédé stéréo en intensité dans une bande de facteurs d'échelle (28) ; et
un premier dispositif de prédiction (60) dans l'autre canal (R), présentant un premier, un second et un troisième dispositif interrupteur (54, 56, 66), le premier, le second et le troisième dispositif interrupteur (54, 56, 66) étant dans un premier état ($IS_{EIN}$) lorsque sont présentes des valeurs spectrales audio stéréo codées par le procédé stéréo en intensité et le premier, le second et le troisième dispositif interrupteur (54, 56, 66) étant dans un second état ($IS_{AUS}$) lorsque des valeurs spectrales audio stéréo codées par le procédé stéréo en intensité ne sont pas présentes :
le premier dispositif de prédiction (60) effectuant une première prédiction avec les valeurs spectrales audio stéréo de l'autre canal (R) décodées par le dispositif de décodage par le procédé stéréo en intensité (64), lorsque le premier, le second et le troisième dispositif interrupteur (54, 56, 66) sont dans le premier état ($IS_{EIN}$), les résultats de la prédiction n'étant, par suite de la position du premier dispositif interrupteur (54), toutefois pas pris en compte dans les valeurs spectrales audio stéréo codées ; et
le dispositif de prédiction (60) effectuant la première prédiction des valeurs spectrales audio stéréo dans la bande de facteurs d'échelle (28), pour obtenir les valeurs spectrales audio stéréo codées de l'autre canal (R) lorsque le premier, le second et le troisième dispositif interrupteur (54, 56, 66) sont dans le second état ($IS_{AUS}$).

**14.** Dispositif suivant la revendication 13, présentant, par ailleurs, un second dispositif de prédiction (40) destiné à effectuer une seconde prédiction des valeurs spectrales audio stéréo dans une bande de facteurs d'échelle, indépendamment d'un codage stéréo en intensité présent, pour former les valeurs spectrales audio stéréo codées de l'un (L) des canaux.

**15.** Dispositif de décodage de valeurs spectrales audio stéréo codées au moins en partie à l'aide du procédé stéréo en intensité et d'une première (60) et d'une seconde prédiction (40), présentant des informations latérales (34), aux caractéristiques suivantes :

un premier dispositif de reprédiction (70) pour un canal (L) de valeurs spectrales audio stéréo, avec une entrée (74) et avec une sortie (76) ;
un second dispositif de reprédiction (70) pour un autre canal (R) de valeurs spectrales audio stéréo, avec une entrée (74) et avec une sortie (76) ;
un dispositif de décodage stéréo en intensité (64) avec une entrée et avec une sortie ;
un premier dispositif de commutation (84) dans l'autre canal (R), destiné à relier la sortie du dispositif de décodage stéréo en intensité (64) à l'entrée (74) du second dispositif de reprédiction (70) lorsque des valeurs spectrales audio stéréo codées par le procédé stéréo en intensité sont présentes, et à relier l'entrée (74) du second dispositif de reprédiction (70) à l'autre canal (R) de valeurs spectrales audio stéréo lorsque les valeurs spectrales audio stéréo ne sont pas codées par le procédé stéréo en intensité ; et
un second dispositif de commutation (78) dans l'autre canal (R), destiné à relier la sortie (76) du second dispositif de reprédiction (70) dans l'autre canal (R) à une sortie de valeurs spectrales audio stéréo décodées de l'autre canal (R) lorsque les valeurs spectrales audio stéréo ne sont pas codées par le procédé stéréo en intensité, et à relier l'entrée (74) du second dispositif de reprédiction (70) dans l'autre canal (R) à la sortie de valeurs spectrales audio stéréo décodées de l'autre canal (R) lorsque les valeurs spectrales audio stéréo sont codées par le procédé stéréo en intensité.

16. Dispsoitif de décodage suivant la revendication 15, dans lequel le dispositif de reprédiction (70) dans l'un (L) des canaux présente un troisième dispositif de commutation (78) et un prédicteur (P), le troisième dispositif de commutation (78) séparant une sortie du prédicteur (50) du premier canal (L), d'où il n'est pas tenu compte des résultats de la prédiction du dispositif de reprédiction (70).

*FIG.1*

18

SKALENFAKTORBÄNDER, RECHTER KANAL:

**28** **28**

sp nsp

skf rinfo

30 34 32

*FIG.2a*

SKALENFAKTORBÄNDER, RECHTER KANAL:

**28**

sp nsp sp nsp

skf rinfo skf rinfo

30 34 32

*FIG.2b*

FIG.3a

FIG.3b

*FIG.4*

FIG.5

FIG.6

EP 0 910 928 B1